# EUROPÄISCHE PATENTSCHRIFT

(11) **EP 3 696 002 B1**
(45) Veröffentlichungstag und Bekanntmachung des Hinweises auf die Patenterteilung: **21.01.2026**
(21) Anmeldenummer: 19209670.9
(22) Anmeldetag: 18.11.2019
(51) Int. Cl.: B60K 11/00, B60K 6/48, B60K 6/387, B60W 10/02, B60W 10/30, B60W 30/184, B01D 46/00, F01P 11/12

(54) **LANDWIRTSCHAFTLICHE ARBEITSMASCHINE MIT KÜHLERAGGREGAT**
AGRICULTURAL MACHINE WITH A COOLING UNIT
MACHINE DE TRAVAIL AGRICOLE POURVUE DE GROUPE DE RADIATEUR

(30) Priorität: 13.02.2019 DE 102019001047
(43) Veröffentlichungstag der Anmeldung: 19.08.2020
(73) Patentinhaber: CLAAS Tractor S.A.S., 78141 Vélizy-Villacoublay Cedex (FR)
(72) Erfinder: Dussere, Thibaut, 92150 Suresnes (FR); Riault, Edouard, 75015 Paris (FR)
(74) Vertreter: CLAAS Gruppe

(56) Entgegenhaltungen:
- EP-A1- 1 035 308
- EP-A1- 2 604 460
- WO-A1-2013/002009
- DE-A1- 102010 011 859
- DE-A1- 4 204 384
- DE-A1- 4 228 586

## Beschreibung

Die vorliegende Erfindung betrifft eine landwirtschaftliche Arbeitsmaschine wie etwa einen Traktor, einen Mähdrescher, Feldhäcksler oder dergleichen. Derartige Arbeitsmaschinen haben herkömmlicherweise als Hauptmotor, zum Antreiben der Fortbewegung sowie von angeschlossenen oder eingebauten Arbeitswerkzeugen, einen Verbrennungsmotor, dessen Abwärme an die Umgebung abgeführt werden muss.

In DE 35 27 54 C ist zu diesem Zweck ein Lüfter für ein Kraftfahrzeug beschrieben, der sowohl von einem Verbrennungsmotor als auch von einer als Elektromotor betreibbaren Dynamomaschine antreibbar ist. Wenn der Verbrennungsmotor in Betrieb ist, treibt er gleichzeitig den Lüfter als auch die Dynamomaschine an, um eine Akkumulatorenbatterie zu laden. Eine Freilaufkupplung ermöglicht es dem Elektromotor, den Lüfter bei Stillstand des Verbrennungsmotors in einer Drehrichtung anzutreiben. Ein Stillstand der Dynamomaschine bei laufendem Verbrennungsmotor ist nicht möglich, so dass Reibungsverluste der Dynamomaschine die Energieeffizienz des Gesamtsystems aus Verbrennungsmotor, Dynamomaschine und Batterie beeinträchtigen.

DE 42 28 586 A1 offenbart eine Kühlanlage für einen Motor, insbesondere einer landwirtschaftlichen Maschine, bei der ein Lüfter durch einen Elektromotor in unterschiedlichen Drehrichtungen antreibbar ist. Da hier die Antriebsenergie für den Lüfter zunächst durch Umwandlung von Verbrennungsenergie in elektrische Energie gewonnen werden muss, ist der Wirkungsgrad des Lüfters bezogen auf den zu seinem Betrieb benötigten Kraftstoff verbesserungsfähig.

DE 10 2010 011 859 A1 beschreibt eine landwirtschaftliche Arbeitsmaschine gemäß dem Oberbegriff des Anspruchs 1.

Aufgabe der vorliegenden Erfindung ist, eine effektiv und mit geringem Energieaufwand kühlbare landwirtschaftliche Arbeitsmaschine anzugeben.

Die Aufgabe wird durch eine landwirtschaftliche Arbeitsmaschine gemäß Anspruch 1 gelöst, indem bei einer landwirtschaftlichen Arbeitsmaschine mit einem Hauptmotor, einer elektrischen Maschine, wenigstens einem Lüfter, einem ersten Antriebsstrang zum Antreiben des Lüfters durch den Hauptmotor und einem zweiten Antriebsstrang zum Koppeln des Lüfters an die elektrische Maschine eine Kupplung zum Trennen und/oder Verbinden der Antriebsstränge vorgesehen ist, und der Lüfter alternativ über den ersten oder zweiten Antriebsstrang oder gleichzeitig über beide Antriebsstränge antreibbar ist.

Die Kupplung kann zwischen einer geschlossenen Stellung, in der ein motorseitiger Anschluss und ein lüfterseitiger Anschluss der Kupplung drehfest gekoppelt sind, und einer ersten Offenstellung umschaltbar sein, in der der lüfterseitige Anschluss in entgegengesetzten Drehrichtungen relativ zum motorseitigen Anschluss drehbar ist.

Zu diesem Zweck können die Kupplung oder zumindest Teile von ihr im ersten Antriebsstrang angeordnet sein, um diesen in der Offenstellung zu unterbrechen.

In der geschlossenen Stellung ermöglicht diese Kupplung einen Antrieb des Lüfters ausschließlich durch den Hauptmotor, ohne Wirkungsgradeinbußen aufgrund einer vorherigen Energieumwandlung. Die elektrische Maschine kann in dieser Stellung als Generator arbeiten. Es ist zwar auch möglich, sie stattdessen als Motor zu betreiben, der den Antrieb des Lüfters unterstützt, doch ist dies im Allgemeinen von geringem Interesse, da die Leistung der elektrischen Maschine nur einen kleinen Bruchteil von der des Hauptmotors ausmacht.

In der offenen Stellung kann die elektrische Maschine den Lüfter auch bei ausgeschaltetem Hauptmotor betreiben, um z.B. diesen nach dem Abschalten noch weiter zu kühlen.

In einer zweiten Offenstellung der Kupplung können ein lüfterseitiger Anschluss der Kupplung und ein maschinenseitiger Anschluss relativ zueinander drehbar sein. Diese Anschlüsse sind in der ersten Offenstellung vorzugsweise drehfest verbunden.

Es ist eine Steuereinheit für die elektrische Maschine vorgesehen, durch die die Drehrichtung der als Motor betriebenen elektrischen Maschine reversierbar ist. Indem der Lüfter mit unterschiedlichen Drehrichtungen betrieben wird, ist es möglich, Schmutz, der sich im Laufe des Betriebs auf dem Weg der Kühlluft ablagert, zu lockern und ggf. zu entfernen.

Die Steuereinheit kann einen Umschalter umfassen, der in einer ersten Schaltstellung eine erste Batterieklemme mit einem ersten Versorgungsanschluss der elektrischen Maschine und eine zweite Batterieklemme mit einem zweiten Versorgungsanschluss der elektrischen Maschine verbindet und in einer zweiten Schaltstellung die erste Batterieklemme mit dem zweiten Versorgungsanschluss und die zweite Batterieklemme mit dem ersten Versorgungsanschluss verbindet.

Die Richtungsumkehr wird dadurch erreicht, dass die elektrische Maschine an einen Wechselrichter mit in mehreren zueinander parallelen Brückenschaltungen angeordneten Schaltern angeschlossen ist und dass die Steuereinheit eingerichtet ist, die Schalter in einer ersten und einer zu der ersten Reihenfolge inversen zweiten Reihenfolge anzusteuern.

Zweckmäßigerweise sollte ein Luftfilter vorgesehen und der Lüfter angeordnet sein, um einen Luftstrom durch den Luftfilter anzutreiben und so Schmutz von den zu kühlenden Oberflächen der Maschine fernzuhalten. Schmutz, der sich beim Betrieb des Lüfters in Hauptdrehrichtung am Luftfilter absetzt und vom Luftstrom an den Filter angedrückt gehalten wird, kann durch eine Umkehr der Luftströmungsrichtung vom Luftfilter weggedrückt und entfernt werden, so dass einer Verstopfung des Luftfilters und einer daraus resultierenden unzureichenden Kühlung oder einem erhöhten Energieverbrauch für die Kühlung entgegengewirkt werden kann.

Wenn ein Kühlluftkanal vom Luftfilter über den Lüfter zu einem zu kühlenden Aggregat verläuft, kann ein Staubauslass für durch die Umkehr der Strömungsrichtung vom Filter gelösten Staub am Kühlluftkanal an einer stromaufwärtigen Seite des Luftfilters vorgesehen sein. Indem der Staub aus dem Kühlluftkanal ausgeschieden wird, kann einer erneuten Ansaugung bei Rückkehr zur Hauptdrehrichtung vorgebeugt werden.

Die Steuereinheit kann an die Kupplung gekoppelt sein, um die elektrische Maschine in geschlossener Stellung der Kupplung als Generator und in offener Stellung als Motor zu betreiben.

Ferner kann die Steuereinheit eingerichtet sein, bei einem Ausschalten des Hauptmotors die Kupplung in die offene Stellung zu versetzen und die elektrische Maschine wenigstens zeitweilig, insbesondere bis an einer geeigneten Messstelle der landwirtschaftlichen Maschine gemessene Temperatur einen Grenzwert unterschreitet, als Motor zu betreiben.

Die Steuereinheit ist ferner eingerichtet, um bei Überschreitung einer Grenztemperatur die Kupplung in die offene Stellung zu versetzen und die elektrische Maschine als Motor so zu betreiben, dass die Drehzahl des lüfterseitigen Anschlusses der Kupplung höher ist als die Drehzahl des motorseitigen Anschlusses. So wird bei Bedarf durch Abkoppeln des Lüfters vom Hauptmotor eine höhere Drehzahl und folglich eine höhere Kühlleistung erreicht als wenn der Lüfter vom Hauptmotor über die Kupplung direkt angetrieben ist.

Weiterhin ist die Steuereinheit auch eingerichtet, wenn das Verhältnis von gemessenem Druckabfall zu Drehzahl des Lüfters einen Grenzwert überschreitet, die Kupplung in die offene Stellung zu versetzen und die elektrische Maschine mit zum Hauptmotor entgegengesetzter Drehrichtung zu betreiben, um so den Luftfilter von Ablagerungen zu befreien und in der Folge eine effizientere Kühlung zu ermöglichen.

Weitere Merkmale und Vorteile der Erfindung ergeben sich aus der nachfolgenden Beschreibung von Ausführungsbeispielen unter Bezugnahme auf die beigefügten Zeichnungen. Es zeigen:
Fig. 1 eine schematische Darstellung einer landwirtschaftlichen Arbeitsmaschine und
Fig. 2 einen Lüfter und dessen Verbindungen zum Hauptmotor und zur elektrischen Maschine der Arbeitsmaschine aus Fig. **1****.**
Fig. 3 ein Detail aus dem Antriebssystem des Lüfters gemäß einer zweiten Ausgestaltung.

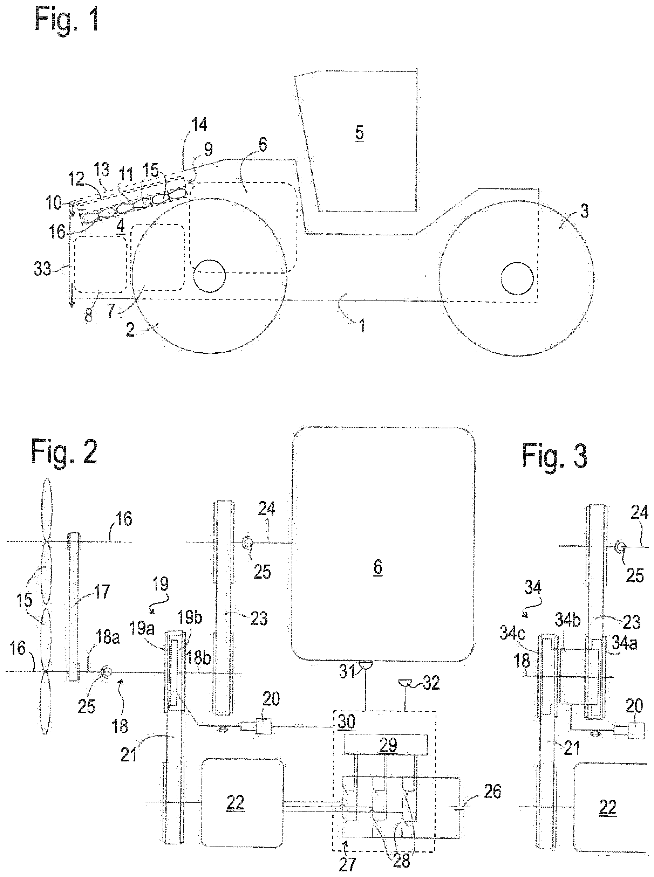

Fig. 1 zeigt als Beispiel einer erfindungsgemäßen landwirtschaftlichen Maschine schematisch einen Traktor von an sich bekanntem äußerem Erscheinungsbild, mit einem Fahrgestell 1, an dem Vorderräder 2 und Hinterräder 3 montiert sind, einem Motorgehäuse 4, das auf dem Fahrgestell montiert und beiderseits von oberen Bereichen der beiden Vorderräder 2 flankiert ist, und einer Fahrerkanzel 5, die in Fahrtrichtung hinter dem Motorgehäuse 4 platziert ist.

Das Motorgehäuse 4 beherbergt einen Hauptmotor 6, typischerweise einen Dieselmotor, sowie eine Lüftereinheit 9. Die Lüftereinheit 9 umfasst in an sich bekannter Weise einen Kühler 10, der von Kühlwasser des Hauptmotors 6 durchströmt ist, und eine Lüfterbaugruppe 11, die einen oder mehrere Lüfter zum Antreiben eines Luftstroms durch den Kühler 10 umfasst. Dem Kühler 10 ist ein Partikelfilter 12 vorgelagert.

Die Lüftereinheit kann in an sich bekannter Weise in aufrechter Orientierung vor dem Hauptmotor 6 angeordnet sein, um Frischluft über einen Einlass an der Stirnseite des Motorgehäuses 4 aufzunehmen; im hier gezeigten Fall ist die Lüftereinheit 9 in im Wesentlichen liegender Orientierung eingebaut, d.h. von ihren drei Abmessungen in zueinander orthogonalen Richtungen verlaufen die beiden längsten im Wesentlichen horizontal, und Frischluft gelangt zu der Lüftereinheit 9 über Lufteinlassöffnungen 13 in einer Decke 14 des Motorgehäuses 4. So ist unterhalb der Lüftereinheit 9 Platz für weitere Aggregate wie etwa eine Abgasnachbereitungseinheit 7, der die Abgase des Hauptmotors 6 zugeführt werden, um ihnen Schadstoffe wie etwa Ruß oder Stickoxide zu entziehen, ein Kraftstofftank 8 oder ein Stellantrieb zum Anheben eines vorn am Traktor montierten, in der Fig. nicht dargestellten Arbeitswerkzeugs.

Fig. 2 zeigt schematisch die Lüfterbaugruppe 11 und deren Antrieb. Die Lüfterbaugruppe 11 hat wie der Kühler 10 die Gestalt eines flachen Quaders, der sich zwischen dem Kühler 10 und dem Partikelfilter 12 erstreckt, so dass eine Lufteinlassfläche der Lüfterbaugruppe 11 dem Partikelfilter 12 und eine Luftauslassfläche dem Kühler 10 zugewandt ist. Ein einzelner Axiallüfter von an sich bekannter Bauart kann den gesamten Querschnitt der Lüfterbaugruppe 11 ausfüllen, bevorzugt ist jedoch eine Anordnung von mehreren Axiallüftern nebeneinander, z. B. eine Matrixanordnung mit 2x3 Axiallüftern 15, um eine Lüfterbaugruppe 11 bilden zu können, bei der sich die längste und die zweitlängste Abmessung voneinander unterscheiden. Drehachsen 16 der Axiallüfter 15 sind jeweils in Richtung der kürzesten Abmessung der Lüfterbaugruppe 11 orientiert, um Luft in Richtung dieser kürzesten Abmessung durch die Lüfterbaugruppe 11 hindurchzufördern.

Die Axiallüfter 15 sind aneinander gekoppelt, z.B. durch einen Riementrieb 17, um über eine gemeinsame Welle 18 angetrieben werden zu können. Ein lüfterseitiger Abschnitt 18a der Welle 18 ist von einem motorseitigen Abschnitt 18b durch eine Kupplung 19 getrennt. Die Kupplung 19 umfasst in an sich bekannter Weise zwei Scheiben 19a, 19b, die zwischen einer Schließstellung, in der sie drehmomentschlüssig aneinander anliegen, und einer Offenstellung, in der sie frei in jeder Richtung gegeneinander drehbar sind, mit Hilfe eines Stellglieds 20 axial verstellbar sind.

Die lüfterseitige Scheibe 19a ist hier gleichzeitig Riemenscheibe eines Riementriebs 21, der die Lüfter 15 mit einer elektrischen Maschine 22 verbindet.

Der motorseitige Abschnitt 18b ist über einen weiteren Riementrieb 23 an den Hauptmotor 6 gekoppelt.

Anstelle der Riementriebe 21, 23 können beliebige andere, in beiden Richtungen Drehmoment übertragende Getriebe verwendet werden.

Die Drehachsen 16 der Axiallüfter 15 sind bei der in Fig. 1 gezeigten Anordnung der Lüftereineinheit 9 nicht parallel mit einer Abtriebswelle 24 des Hauptmotors 6. Um dennoch die Axiallüfter 13 mechanisch an die Abtriebswelle 24 koppeln zu können, kann zwischen dieser und dem Riementrieb 23 oder in der Welle 18 ein Kardangelenk 25 vorgesehen sein.

Die elektrische Maschine kann ein einfacher Gleichstrommotor sein, dessen Laufrichtung umkehrbar ist, indem seine zwei Anschlussklemmen über einen Schalter wahlweise direkt oder über Kreuz mit den Klemmen einer Batterie verbunden werden. Fig. 2 zeigt als elektrische Maschine 22 eine dreiphasige Maschine, die mit der Batterie 26 über einen Wechselrichter 27 verbunden ist. Der Wechselrichter 27 umfasst in an sich bekannter Weise drei parallel zueinander mit den Klemmen der Batterie 26 verbundene Brücken mit je zwei Schaltern 28, die von einer Treiberschaltung 29 in einer ersten Reihenfolge zum Antreiben der Maschine 22 in einem Vorwärtsdrehsinn oder in einer zur ersten umgekehrten Reihenfolge zum Antreiben der Maschine 22 in einem Rückwärtsdrehsinn ansteuerbar sind.

Der Wechselrichter 27 und die Treiberschaltung 29 sind Teile einer Steuereinheit 30, die mit einem Temperatursensor 31 und einem Drucksensor 32 zum Abschätzen eines Druckabfalls entlang des Wegs der Kühlluft durch das Motorgehäuse 4 verbunden ist. Der Drucksensor 32 kann insbesondere ein Differenzdrucksensor sein, der an der Lüfterbaugruppe 11 angeordnet ist, um die Druckdifferenz zwischen stromauf- und -abwärtiger Seite der Lüfterbaugruppe 11 oder ihres Partikelfilters 12 zu erfassen. Die Steuereinheit 30 ist mit dem Stellglied 20 verbunden, um die Kupplung 19 zu öffnen und zu schließen.

Die Steuereinheit 30 unterstützt die nachfolgend beschriebenen Betriebsmodi:
- ein Normalbetriebsmodus, in dem die Kupplung 19 geschlossen ist, so dass der Hauptmotor 6 die Axiallüfter 15 und die elektrische Maschine 22 mit einem Vorwärtsdrehsinn antreibt, so dass die Axiallüfter 15 Frischluft durch die Lufteinlassöffnungen 13 in das Motorgehäuse 4 einsaugen. Die elektrische Maschine 22 kann in diesem Betriebsmodus je nach Ladestand der Batterie 26 passiv mitlaufen oder vom Wechselrichter 27 als Generator angesteuert sein;
- ein Niedrigleistungsmodus, in dem die Kupplung 17 offen ist und die elektrische Maschine 22 mit niedriger Leistung arbeitet oder ausgeschaltet ist, so dass die Axiallüfter 15 im Vorwärtsdrehsinn mit einer niedrigeren Drehzahl laufen, als sie es zur gleichen Zeit bei geschlossener Kupplung 19, direkt vom Hauptmotor 6 angetrieben, täten;
- ein Hochleistungsmodus, in dem die Kupplung 19 offen ist und die elektrische Maschine 22 mit hoher Leistung arbeitet, um die Axiallüfter 15 im Vorwärtsdrehsinn mit einer höheren Drehzahl anzutreiben, als sie es zur gleichen Zeit bei geschlossener Kupplung 19 täten;
- ein Rückwärtsbetriebsmodus, in dem die Kupplung 19 offen ist und die elektrische Maschine 22 mit hoher Leistung im Rückwärtsdrehsinn betrieben wird, um einen Luftstrom in Gegenrichtung durch die Lüfterbaugruppe 11 anzutreiben.

Der Niedrigleistungsmodus wird dann gewählt, wenn eine vom Temperatursensor 31 erfasste Temperatur unter einem unteren Schwellwert liegt. So kann der Hauptmotor 6 nach einem Kaltstart schnell auf Betriebstemperatur gebracht werden; außerdem kann der Energieverbrauch für die Kühlung vermindert werden, wenn etwa bei Straßenfahrt die landwirtschaftliche Maschine sich mit niedriger Leistung des Hauptmotors 6 zügig bewegt.

Der Hochleistungsmodus wird dann gewählt, wenn die vom Temperatursensor 31 erfasste Temperatur über einem oberen Schwellwert liegt, die im Normalbetriebsmodus verfügbare Kühlleistung also für eine ausreichende Kühlung des Hauptmotors 6 nicht mehr ausreicht. Zusätzlich kann der Hochleistungsmodus dann gewählt werden, wenn die Maschine nach Ausschalten des Hauptmotors 6 nachgekühlt werden soll.

Der Rückwärtsbetriebsmodus wird immer dann aktiviert, wenn das Verhältnis von gemessenem Druckabfall zu Drehzahl der Axiallüfter 15 einen Grenzwert überschreitet.

Schmutz, der sich in einem der Vorwärtsbetriebsmodi an der stromaufwärtigen Seite des Partikelfilters 12 abgelagert hat, wird im Rückwärtsbetriebsmodus wieder vom Partikelfilter 12 weggedrückt und könnte bei vertikaler Einbaulage des Partikelfilters zu Boden fallen. Bei der in Fig. 1 gezeigten schrägen Einbaulage des Partikelfilters wird der abgehobene Schmutz in einen Schwebezustand versetzt, in dem er der Neigung des Partikelfilters folgend abwärts gleitet, dessen vordere untere Kante passiert und schließlich das Motorgehäuse 4 über einen Auslass 33 in Form eines Spaltes zwischen der Stirnwand und dem vordersten Aggregat 8 verlässt.

Fig. 3 zeigt einen Ausschnitt aus den den Ventilator antreibenden Antriebssträngen gemäß einer zweiten Ausgestaltung. Komponenten, die bereits mit Bezug auf Fig. 1 beschriebenen entsprechen, tragen dieselben Bezugszeichen und werden nicht erneut beschrieben. Eine Kupplung 34 weist hier als lüfterseitigen Anschluss 34b einen auf der Welle 18 drehfesten, durch das Stellglied 20 axial verschiebbaren Gleiter auf. Ein motorseitiger und ein maschinenseitiger Anschluss sind jeweils durch eine Riemenscheibe 34a des Riementriebs 23 bzw. 34c des Riementriebs 21 gebildet. Wenn der Gleiter 34b nicht in die Riemenscheiben eingreift, wie in Fig. 3 für die Riemenscheibe 34c gezeigt, sind diese frei um die Welle 18 drehbar. Verzahnungen am Umfang des Gleiters 34b und in den Gleiter 34b aufnehmenden Aussparungen der Riemenscheiben 34a, 34c koppeln die Riemenscheiben drehfest an die Welle, wie in Fig. 3 für die Riemenscheibe 34a gezeigt.

In der gezeigten Stellung des Gleiters sind die Lüfter 15 durch den Hauptmotor 6 angetrieben; die elektrische Maschine kann im Stillstand verharren. So kann eine Belastung des Hauptmotors 6 durch die elektrische Maschine 22 vermieden werden, wenn die Steuereinheit 30 den Ladezustand der Batterie 26 als ausreichend beurteilt.

Um die elektrische Maschine 22 als Generator zu betreiben, die Lüfter 15 durch den Hauptmotor 6 und die elektrische Maschine 22 gemeinsam anzutreiben oder einen Übergang zu rein elektrischem Antrieb der Lüfter 15 vorzubereiten, verschiebt die Steuereinheit 30 mit Hilfe des Stellglieds den Gleiter 34b um einen Schritt in Richtung der Riemenscheibe 34c. Dadurch gelangt der Gleiter 34b an der Riemenscheibe 34c in Eingriff, und der Eingriff an der Riemenscheibe 34 besteht fort. Die Kupplung 34 ist nun in beiden Richtungen geschlossen, und Hauptmotor 6, Lüfter 15 und elektrische Maschine 22 sind drehfest aneinander gekoppelt.

Bei Verschiebung um einen weiteren Schritt in Richtung der Riemenscheibe 34c geht der Eingriff des Gleiters 34b an der Riemenscheibe 34a verloren. Dadurch ist der erste Antriebsstrang zwischen Hauptmotor 6 und Lüftern 15 unterbrochen, und letztere können nur noch über die elektrische Maschine 22 angetrieben werden. Wie mit Bezug auf Fig. 2 beschrieben, können die Lüfter 15 nun je nach Bedarf schneller als der Drehzahl des Hauptmotors entspricht, langsamer oder gar mit umgekehrter Drehrichtung betrieben werden.

### Bezugszeichenliste

- 1: Fahrgestell
- 2: Vorderrad
- 3: Hinterrad
- 4: Motorgehäuse
- 5: Fahrerkanzel
- 6: Antriebsmotor
- 7: Zusatzaggregat (Abgasnachbereitungseinheit)
- 8: Zusatzaggregat (Kraftstofftank)
- 9: Lüftereinheit
- 10: Kühler
- 11: Lüfterbaugruppe
- 12: Partikelfilter
- 13: Lufteinlassöffnung
- 14: Decke
- 15: Axiallüfter
- 16: Drehachse
- 17: Riementrieb
- 18: Welle
- 18a: lüfterseitiger Abschnitt
- 18b: motorseitiger Abschnitt
- 19: Kupplung
- 19a: Scheibe
- 19b: Scheibe
- 20: Stellglied
- 21: Riementrieb
- 22: elektrische Maschine
- 23: Riementrieb
- 24: Abtriebswelle
- 25: Kardangelenk
- 26: Batterie
- 27: Wechselrichter
- 28: Schalter
- 29: Treiberschaltung
- 30: Steuereinheit
- 31: Temperatursensor
- 32: Drucksensor
- 33: Auslass

## Patentansprüche

1. Landwirtschaftliche Arbeitsmaschine mit einem Hauptmotor (6), einer elektrischen Maschine (22), wenigstens einem Lüfter (15), einem ersten Antriebsstrang zum Antreiben des Lüfters (15) durch den Hauptmotor (6) und einem zweiten Antriebsstrang zum Koppeln des Lüfters (15) an die elektrische Maschine (22), wobei eine Kupplung (19) zum Trennen und/oder Verbinden der Antriebsstränge vorgesehen ist, und dass der Lüfter (15) alternativ über den ersten oder zweiten Antriebsstrang oder gleichzeitig über beide Antriebsstränge antreibbar ist, wobei eine Steuereinheit (30) vorgesehen ist, durch die die Drehrichtung der als Motor betriebenen elektrischen Maschine (22) reversierbar ist, wobei die elektrische Maschine (22) an einen Wechselrichter (27) mit in mehreren zueinander parallelen Brückenschaltungen angeordneten Schaltern (28) angeschlossen ist, wobei die Steuereinheit (30) eingerichtet ist, die Schalter (28) in einer ersten und einer zu der ersten Reihenfolge inversen zweiten Reihenfolge anzusteuern, **dadurch gekennzeichnet, dass** der Wechselrichter (27) und eine Treiberschaltung (29) Teile der Steuereinheit (30) sind, die mit einem Temperatursensor (31) und einem Drucksensor (32) zum Abschätzen eines Druckabfalls entlang des Wegs der Kühlluft durch das Motorgehäuse (4) verbunden ist, wobei die Steuereinheit (30) eingerichtet ist, die Kupplung (19) und die elektrische Maschine (22) abhängig von Informationen des Temperatursensors (31) und des Drucksensors (32) zum Betrieb des Lüfters (15) anzusteuern, wobei die Steuereinheit (30) eingerichtet ist, bei Überschreitung einer Grenztemperatur die Kupplung (19) in die offene Stellung zu versetzen und die elektrische Maschine (22) als Motor so zu betreiben, dass die Drehzahl des lüfterseitigen Anschlusses (19a) der Kupplung (19) höher ist als die Drehzahl des motorseitigen Anschlusses (19b), wobei die Steuereinheit (30) eingerichtet ist, wenn das Verhältnis von gemessenem Druckabfall zu Drehzahl des Lüfters (15) einen Grenzwert überschreitet, die Kupplung (19) in die offene Stellung zu versetzen und die elektrische Maschine (22) als Motor so zu betreiben, dass der Lüfter (15) mit zur Drehrichtung bei Antrieb durch den Hauptmotor (6) entgegengesetzter Drehrichtung rotiert.

2. Landwirtschaftliche Arbeitsmaschine nach Anspruch 1, **dadurch gekennzeichnet, dass** die Kupplung (19) zwischen einer geschlossenen Stellung, in der ein motorseitiger Anschluss (19b) und ein lüfterseitiger Anschluss (19a) der Kupplung (19) drehfest gekoppelt sind, und einer ersten Offenstellung umschaltbar ist, in der der lüfterseitige Anschluss (19a) in entgegengesetzten Drehrichtungen relativ zum motorseitigen Anschluss (19b) drehbar ist.

3. Landwirtschaftliche Arbeitsmaschine nach Anspruch 1 oder 2, **dadurch gekennzeichnet, dass** in einer zweiten Offenstellung der Kupplung ein lüfterseitiger Anschluss (19a) der Kupplung (19) und ein maschinenseitiger Anschluss (19c) relativ zueinander drehbar sind.

4. Landwirtschaftliche Arbeitsmaschine nach einem der vorhergehenden Ansprüche, **dadurch gekennzeichnet, dass** der Lüfter (15) angeordnet ist, um einen Luftstrom durch einen Luftfilter (12) anzutreiben.

5. Landwirtschaftliche Arbeitsmaschine nach Anspruch 5, **dadurch gekennzeichnet, dass** ein Kühlluftkanal vom Luftfilter (12) über den Lüfter (15) und ein zu kühlendes Aggregat verläuft und ein Staubauslass (33) am Kühlluftkanal an einer stromaufwärtigen Seite des Luftfilters (12) vorgesehen ist.

6. Landwirtschaftliche Arbeitsmaschine nach einem der vorhergehenden Ansprüche, **dadurch gekennzeichnet, dass** die Steuereinheit (30) eingerichtet ist, die elektrische Maschine (22) in geschlossener Stellung der Kupplung (19) als Generator und in offener Stellung als Motor zu betreiben.

7. Landwirtschaftliche Arbeitsmaschine nach einem der vorhergehenden Ansprüche, **dadurch gekennzeichnet, dass** die Steuereinheit (30) eingerichtet ist, bei einem Ausschalten des Hauptmotors (6) die Kupplung (19) in die offene Stellung zu versetzen und die elektrische Maschine (22) als Motor zu betreiben.

## Claims

1. An agricultural working machine with a main motor (6), an electric machine (22), at least one fan (15), a first drive train for driving the fan (15) by the main motor (6) and a second drive train for coupling the fan (15) to the electric machine (22), wherein a clutch (19) is provided for disconnecting and/or connecting the drive trains, and the fan (15) can be driven via the first drive train or alternatively via the second drive train or via both drive trains at the same time, wherein a control unit (30) is provided, by means of which the direction of rotation of the electric machine (22) operated as a motor can be reversed, wherein the electric machine (22) is connected to an inverter (27) with switches (28) disposed in a plurality of mutually parallel bridge circuits, wherein the control unit (30) is configured to control the switches (28) in a first sequence and in a second sequence which is reversed with respect to the first sequence, **characterized in that** the inverter (27) and a driver circuit (29) are parts of the control unit (30) which is connected to a temperature sensor (31) and a pressure sensor (32) in order to evaluate a pressure drop along the path of the cooling air through the motor housing (4), wherein the control unit (30) is configured to control the clutch (19) and the electric machine (22) as a function of information from the temperature sensor (31) and the pressure sensor (32) in order to operate the fan (15), wherein the control unit (30) is configured, when a temperature limit is exceeded, to move the clutch (19) into the open position and to operate the electric machine (22) as a motor in a manner such that the speed of the fan-side connection (19a) of the clutch (19) is higher than the speed of the motor-side connection (19b), wherein the control unit (30) is configured, when the relationship of the measured pressure drop to the speed of the fan (15) exceeds a limiting value, to move the clutch (19) into the open position and to operate the electric machine (22) as a motor such that the fan (15) rotates in the direction of rotation which is opposite to the direction of rotation when driven by the main motor (6).

2. The agricultural working machine according to claim 1, **characterized in that** the clutch (19) can be switched between a closed position, in which a motor-side connection (19b) and a fan-side connection (19a) of the clutch (19) are coupled in a manner which is fixed against rotation, and a first open position in which the fan-side connection (19a) can be rotated in opposite directions of rotation relative to the motor-side connection (19b).

3. The agricultural working machine according to claim 1 or claim 2, **characterized in that** in a second open position of the clutch, a fan-side connection (19a) of the clutch (19) and a machine-side connection (19c) are rotatable with respect to each other.

4. The agricultural working machine according to one of the preceding claims, **characterized in that** the fan (15) is disposed to drive a flow of air through an air filter (12).

5. The agricultural working machine according to claim 5, **characterized in that** a cooling air duct extends from the air filter (12) via the fan (15) and to an assembly to be cooled and a dust outlet (33) is provided on the cooling air duct on an upstream side of the air filter (12).

6. The agricultural working machine according to one of the preceding claims, **characterized in that** the control unit (30) is configured to operate the electric machine (22) as a generator in the closed position of the clutch (19) and as a motor in the open position.

7. The agricultural working machine according to one of the preceding claims, **characterized in that** the control unit (30) is configured to move the clutch (19) into the open position and to operate the electric machine (22) as a motor when the main motor (6) is switched off.

## Revendications

1. Machine de travail agricole, comprenant un moteur principal (6), une machine électrique (22), au moins un ventilateur (15), une première chaîne cinématique pour l'entraînement du ventilateur (15) par le moteur principal (6), et une deuxième chaîne cinématique pour accoupler le ventilateur (15) à la machine électrique (22), un accouplement (19) étant prévu pour la séparation et/ou la liaison des chaînes cinématiques, et le ventilateur (15) pouvant être entraîné au choix par l'intermédiaire de la première ou de la deuxième chaîne cinématique, ou simultanément par les deux chaînes cinématiques, une unité de commande (30) étant prévue, qui permet d'inverser le sens de rotation de la machine électrique (22) utilisée comme moteur, la machine électrique (22) étant connectée à un onduleur (27) comportant des interrupteurs (28) disposés dans plusieurs montages en pont mutuellement parallèles, l'unité de commande (30) étant conçue pour activer les interrupteurs (28) dans un premier ordre et dans un deuxième ordre inversé par rapport au premier ordre, **caractérisée en ce que** l'onduleur (27) et un circuit d'attaque (29) font partie de l'unité de commande (30), laquelle est reliée à un capteur de température (31) et à un capteur de pression (32) aux fins d'évaluer une chute de pression le long du trajet de l'air de refroidissement à travers le carter de moteur (4), l'unité de commande (30) étant conçue pour activer l'accouplement (19) et la machine électrique (22) en vue du fonctionnement du ventilateur (15), en fonction d'informations du capteur de température (31) et du capteur de pression (32), l'unité de commande (30) étant conçue pour faire passer l'accouplement (19) dans la position ouverte, en cas de dépassement d'une température limite, et faire fonctionner la machine électrique (22) en tant que moteur, de manière à ce que la vitesse de rotation du raccord côté ventilateur (19a) de l'accouplement (19) soit plus élevée que la vitesse de rotation du raccord côté moteur (19b), l'unité de commande (30) étant conçue pour faire passer l'accouplement (19) dans la position ouverte, si le rapport entre la chute de pression mesurée et la vitesse de rotation du ventilateur (15) dépasse une valeur limite, et faire fonctionner la machine électrique (22) en tant que moteur, de manière à ce que le ventilateur (15) tourne dans le sens de rotation opposé au sens de rotation lors de l'entraînement par le moteur principal (6).

2. Machine de travail agricole selon la revendication 1, **caractérisée en ce que** l'accouplement (19) peut être commuté entre une position fermée, dans laquelle un raccord côté moteur (19b) et un raccord côté ventilateur (19a) de l'accouplement (19) sont accouplés de manière solidaire en rotation, et une première position ouverte, dans laquelle le raccord côté ventilateur (19a) peut être tourné dans des sens de rotation opposés par rapport au raccord côté moteur (19b).

3. Machine de travail agricole selon la revendication 1 ou 2, **caractérisée en ce que** dans une deuxième position ouverte de l'accouplement, un raccord côté ventilateur (19a) de l'accouplement (19) et un raccord côté machine (19c) peuvent être mis en rotation l'un par rapport à l'autre.

4. Machine de travail agricole selon une des revendications précédentes, **caractérisée en ce que** le ventilateur (15) est disposé pour entraîner un flux d'air à travers un filtre à air (12).

5. Machine de travail agricole selon la revendication 5, **caractérisée en ce qu'**une conduite d'air de refroidissement s'étend à partir du filtre à air (12) en passant par le ventilateur (15) et un groupe à refroidir, et une sortie de poussière (33) est prévue sur la conduite d'air de refroidissement, sur un côté amont du filtre à air (12).

6. Machine de travail agricole selon une des revendications précédentes, **caractérisée en ce que** l'unité de commande (30) est conçue pour faire fonctionner la machine électrique (22) comme générateur lorsque l'accouplement (19) est en position fermée, et comme moteur lorsqu'il est en position ouverte.

7. Machine de travail agricole selon une des revendications précédentes, **caractérisée en ce que** l'unité de commande (30) est conçue pour amener l'accouplement (19) dans la position ouverte, en cas de coupure du moteur principal (6), et faire fonctionner la machine électrique (22) comme moteur.
